# EUROPÄISCHE PATENTANMELDUNG

(11) **EP 1 356 973 A1**
(43) Veröffentlichungstag der Anmeldung: **29.10.2003**
(21) Anmeldenummer: 02009548.5
(22) Anmeldetag: 26.04.2002
(51) Int. Cl.: B60K 15/01, B60K 28/14

(54) **Vorrichtung zur Verhinderung eines Motorbrandes in einem Kraftfahrzeug**

(71) Anmelder: Pamboris Lambros, 72160 Horb (DE)
(72) Erfinder: Pamboris Lambros, 72160 Horb (DE)
(74) Vertreter: Späth, Dieter, Dipl.-Ing.

(57) **Zusammenfassung**

Die Erfindung betrifft eine Vorrichtung (26) zur Verhinderung eines Motorbrandes in einem Kraftfahrzeug (Kraftwagen 10) bei einem Unfall. Die Erfindung schlägt vor, bei einem Unfall einen Kraftstofftank (14) des Kraftwagens (10) mit einem ersten Absperrventil (28) von einer Kraftstoffleitung (18) zu trennen und Kraftstoff aus einer Gemischbildungsanlage (16) und der Kraftstoffleitung (18) durch diese in einen zusätzlichen Kraftstoffbehälter (30) zu entleeren. Dazu kann der Kraftstoffbehälter (30) mit Unterdruck beaufschlagt oder ein Druckluftbehälter (46) an die Gemischbildungsanlage (16) angeschlossen sein.

## Beschreibung

Die Erfindung betrifft eine Vorrichtung zur Verhinderung eines Motorbrandes in einem Kraftfahrzeug mit den Merkmalen des Oberbegriffs des Anspruchs 1.

In einem Kraftfahrzeug kann es bei einem Unfall dadurch zu einem Motorbrand kommen, dass Kraftstoff (insbesondere Benzin oder Diesel) ausläuft und sich an einem heißen Motorteil oder einer Abgasanlage entzündet. Kraftstoff kann beispielsweise aus einer durch den Unfall undicht gewordenen oder abgerissenen Kraftstoffleitung austreten.

Der Erfindung liegt die Aufgabe zugrunde, eine Vorrichtung vorzuschlagen, die einen Motorbrand in einem Kraftfahrzeug bei einem Unfall verhindert oder jedenfalls die Wahrscheinlichkeit eines Motorbrandes bei einem Unfall verringert.

Diese Aufgabe wird erfindungsgemäß durch die Merkmale des Anspruchs 1 gelöst. Die erfindungsgemäße Vorrichtung weist ein Absperrventil auf, das in einer von einem Kraftstofftank zu einem Verbrennungsmotor führenden Kraftstoffleitung, vorzugsweise nahe dem Kraftstofftank, angeordnet ist. Weist das Kraftfahrzeug mehrere Kraftstoffleitungen auf, beispielsweise außer der eigentlichen Kraftstoffleitung zur Versorgung des Verbrennungsmotors des Kraftfahrzeugs mit Kraftstoff eine vom Verbrennungsmotor zum Kraftstofftank zurückführende Rückleitung, so ist in jeder dieser Kraftstoffleitungen ein Absperrventil angeordnet. Die Absperrventile können gemeinsam beispielsweise mit einem Elektromagneten betätigt werden und zu einer Baueinheit zusammengefasst sein. Bei einem Unfall wird die Kraftstoffleitung mit dem Absperrventil abgesperrt, so dass kein Kraftstoff aus dem Kraftstofftank durch die Kraftstoffleitung in Richtung des Verbrennungsmotors fließen kann. Dadurch wird vermieden, dass Kraftstoff aus dem Kraftstofftank durch die Kraftstoffleitung zum Verbrennungsmotor ausläuft.

Zur Erkennung eines Unfalls weist die erfindungsgemäße Vorrichtung einen Beschleunigungssensor auf, wie er beispielsweise zum Auslösen von Airbags oder Gurtstraffern bekannt ist. Ein im Kraftfahrzeug vorhandener Beschleunigungssensor kann für die erfindungsgemäße Vorrichtung genutzt werden.

Des weiteren weist die erfindungsgemäße Vorrichtung eine Einrichtung zum Entleeren von Kraftstoff aus der Kraftstoffleitung in einen Kraftstofftank des Kraftfahrzeugs oder einen zusätzlich vorgesehenen Kraftstoffbehälter auf. Die Einrichtung entfernt Kraftstoff aus der Kraftstoffleitung und verhindert dadurch, dass Kraftstoff aus der Kraftstoffleitung am Verbrennungsmotor ausläuft. Die Einrichtung ist vorzugsweise so angeschlossen, dass sie außer der Kraftstoffleitung auch eine Gemischbildungsanlage oder sonstige Kraftstoff enthaltende Teile des Verbrennungsmotors durch die Kraftstoffleitung in den Kraftstofftank oder den zusätzlichen Kraftstoffbehälter entleert. Wird der Kraftstoff in den Kraftstofftank des Kraftfahrzeugs entleert, wird das in der Kraftstoffleitung angeordnete Absperrventil erst nach der Entleerung der Kraftstoffleitung und eventuell der Gemischbildungsanlage geschlossen. Ist ein zusätzlicher Kraftstoffbehälter vorhanden kann das Absperrventil gleich bei Erkennung eines Unfalls geschlossen werden. Das Schließen des in der Kraftstoffleitung angeordneten Absperrventils und das Entleeren der Kraftstoffleitung erfolgt in einer mit dem Füllen eines Airbags oder dem Straffen eines Sicherheitsgurts vergleichbar kurzen Zeitspanne. Dadurch ist das Absperrventil geschlossen und die Kraftstoffleitung von Kraftstoff entleert bevor die Kraftstoffleitung durch den Unfall undicht oder abgerissen werden kann.

Die Erfindung hat den Vorteil, dass sie die Gefahr eines Motorbrandes bei einem Unfall mit einem Kraftfahrzeug verringert. Die Erfindung vermeidet insbesondere das Auslaufen von Benzin aus einer Kraftstoffleitung, die infolge des Unfalls undicht geworden oder abgerissen ist. Die Gefahr eines Fahrzeugbrandes bei einem Unfall ist dadurch vermindert. Desweiteren bewirkt die Erfindung, dass der Verbrennungsmotor ausgeht. Weiterer Vorteil der erfindungsgemäßen Vorrichtung ist, dass sie mit geringem Aufwand herstell- und in ein Kraftfahrzeug einbaubar ist. Letzteres gilt insbesondere für die Erstausrüstung eines Kraftfahrzeugs mit der erfindungsgemäßen Vorrichtung bei der Serienfertigung. Allerdings ist auch ein Nachrüsten eines Kraftfahrzeugs mit der erfindungsgemäßen Vorrichtung mit geringem Aufwand möglich.

In bevorzugter Ausgestaltung der Erfindung ist ein Kraftstoffbehälter zusätzlich zum Kraftstofftank des Kraftfahrzeugs vorgesehen, in den der Kraftstoff aus der Kraftstoffleitung bei einem Unfall entleert wird. Dies ermöglicht das Schließen des in der Kraftstoffleitung angeordneten, den Kraftstofftank mit der Kraftstoffleitung verbindenden bzw. von ihr trennenden Sperrventils sofort bei Erkennung eines Unfalls und nicht erst nach Entleerung der Kraftstoffleitung.

Zum Entleeren der Kraftstoffleitung sieht eine Ausgestaltung der Erfindung vor, den zusätzlichen Kraftstoffbehälter mit Unterdruck zu beaufschlagen. Ein zweites Absperrventil trennt den zusätzlichen Kraftstoffbehälter im gewöhnlichen Fahrbetrieb von der Kraftstoffleitung. Bei einem Unfall wird das zweite Absperrventil geöffnet und der zusätzliche Kraftstoffbehälter saugt aufgrund des in ihm herrschenden Unterdrucks den Kraftstoff aus der Kraftstoffleitung und ggf. einer Gemischbildungsanlage des Verbrennungsmotors ab. Das zweite Absperrventil und der mit Unterdruck beaufschlagte zusätzliche Kraftstoffbehälter bilden die Einrichtung zum Entleeren der Kraftstoffleitung von Kraftstoff. Der Unterdruck im zusätzlichen Kraftstoffbehälter kann in gleicher Weise wie beispielsweise in einem Unterdruck-Bremskraftverstärker, also durch Anschluss an ein Saugrohr, einen Vergaser oder dgl. Unterdruck führendes Teil des Verbrennungsmotors oder seiner Gemischbildungsanlage erzeugt werden. Diese Ausgestaltung der Erfindung hat den Vorteil, dass sie einen nur geringen Aufwand erfordert. Weiterer Vorteil der Entleerung der Kraftstoffleitung mittels Unterdruck ist, dass bei Undichtigkeit der Kraftstoff abgesaugt und nicht durch die undichte Stelle ausgepresst wird. Auch vermeidet Unterdruck ein Undichtwerden einer beispielsweise porösen oder in sonstiger Weise schadhaften, noch nicht undichten Kraftstoffleitung.

Eine Weiterbildung der Erfindung sieht ein drittes Absperrventil vor, das im Bereich einer Gemischbildungsanlage des Verbrennungsmotors angeordnet ist. Das dritte Absperrventil ist im gewöhnlichen Fahrbetrieb geschlossen und wird bei einem Unfall geöffnet. Durch das dritte Absperrventil strömt Umgebungsluft in die Gemischbildungsanlage und/oder die Kraftstoffleitung wenn der Kraftstoff durch den Unterdruck im zusätzlichen Kraftstoffbehälter aus der Gemischbildungsanlage und/oder der Kraftstoffleitung entleert wird.

Eine Ausgestaltung der Erfindung sieht einen Druckmittelbehälter vor, der über ein Absperrventil an die Kraftstoffleitung oder vorzugsweise an die Gemischbildungsanlage des Verbrennungsmotors angeschlossen ist. Bei einem Unfall wird das Absperrventil geöffnet und das Druckmittel aus dem Druckmittelbehälter verdrängt den Kraftstoff aus der Kraftstoffleitung und gegebenenfalls aus der Gemischbildungsanlage in den Kraftstofftank oder den zusätzlichen Kraftstoffbehälter. Als Druckmittel kommen Druckluft oder ein anderes, insbesondere unbrennbares Gas in Betracht. Auch ein flüssiges Druckmittel ist möglich. Der Druckmittelbehälter mit dem Absperrventil bilden eine zweite Möglichkeit einer Einrichtung zum Entleeren von Kraftstoff aus der Kraftstoffleitung. Die Entleerung der Kraftstoffleitung von Kraftstoff kann wahlweise durch Unterdruck und/oder mit Druckmittel mit einer der beiden oder beiden erläuterten Einrichtungen erfolgen.

Eine Ausgestaltung der Erfindung sieht eine Bypassleitung vor, die ein Kraftstoff enthaltendes Bauteil des Verbrennungsmotors, das nicht in Richtung des Kraftstofftanks durchströmbar ist, umgeht. Ein solches Bauteil kann beispielsweise eine Kraftstoffpumpe sein. Sind mehrere solche Bauteile vorhanden, die nicht mit einer gemeinsamen Bypassleitung umgangen werden können, ist für jedes dieser Bauteile eine Bypassleitung vorgesehen. In der Bypassleitung ist ein Bypassventil angeordnet, das im gewöhnlichen Fahrbetrieb geschlossen ist und das bei einem Unfall geöffnet wird. Die Bypassleitung ermöglicht das Entleeren der Kraftstoffleitung und ggf. der Gemischbildungsanlage an einem nicht in Richtung des Kraftstofftanks durchströmbaren Bauteil vorbei. Mit einer Bypassleitung können auch Bauteile umgangen werden, die einen hohen Durchströmungswiderstand in Richtung des Kraftstoffbehälters aufweisen und die Entleerung der Kraftstoffleitung behindern oder verzögern würden.

Eine Weiterbildung der Erfindung sieht ein Element vor, mit dem die Vorrichtung manuell auslösbar ist. Diese Einrichtung ermöglich es einem Fahrzeuginsassen die Vorrichtung auch dann auszulösen, wenn der Beschleunigungssensor keinen Unfall erkennt oder kein Unfall stattgefunden hat. Die erfindungsgemäße Vorrichtung lässt sich dadurch beispielsweise bei einem Motorbrand von Hand auslösen um zu vermeiden, dass Kraftstoff aus dem Kraftstofftank durch die Kraftstoffleitung zum Verbrennungsmotor ausläuft.

Die Brandgefahr lässt sich weiter verringern, wenn im Falle eines Benzinmotors die Zündung abgestellt und/oder die Fahrzeugelektrik oder eine Teil von ihr bei einem Unfall ausgeschaltet werden. Das Abschalten der Fahrzeugelektrik kann zeitverzögert erfolgen, so dass die Fahrzeugelektrik bis zum Stillstand des Fahrzeugs betriebsbereit bleibt. Zündung und Fahrzeugelektrik müssen dadurch nicht manuell nach dem Unfall ausgeschaltet werden. Hierauf ist die Ausgestaltung der Erfindung gemäß Anspruch 8 gerichtet. Dieses Ausgestaltung der Erfindung lässt sich auch unabhängig von der übrigen Erfindung für sich allein verwirklichen.

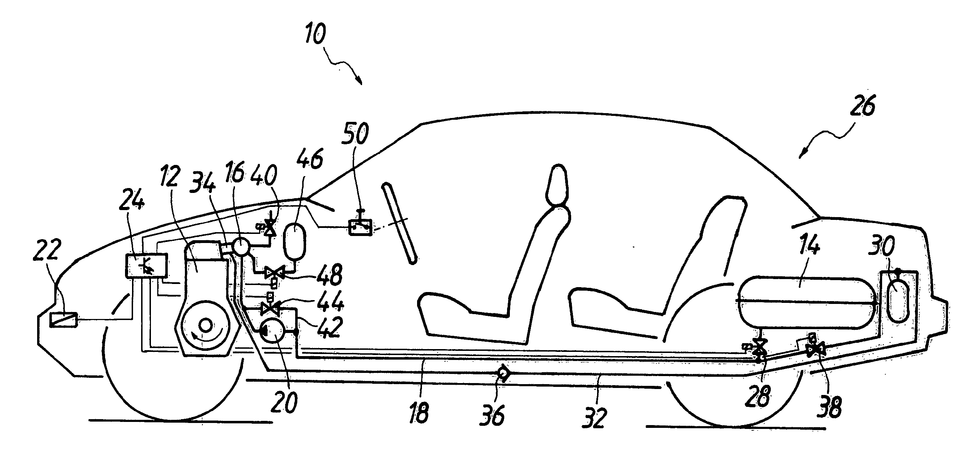

Die Erfindung wird nachfolgend anhand eines in der Zeichnung dargestellten Ausführungsbeispiels näher erläutert. Die einzige Figur zeigt ein Kraftfahrzeug mit einer erfindungsgemäßen Vorrichtung in vereinfachter, schematisierter Darstellung.

In der Zeichnung ist ein Kraftwagen 10 als Kraftfahrzeug dargestellt, das einen vorn eingebauten Verbrennungsmotor 12 (Benzin oder Diesel) zum Antrieb und einen hinten im Bereich eines Kofferraums eingebauten Kraftstofftank 14 aufweist. Am Verbrennungsmotor 12 ist eine Gemischbildungsanlage 16 angeordnet. Die nicht im Einzelnen dargestellte Gemischbildungsanlage 16 kann beispielsweise einen Vergaser oder eine Einspritzanlage aufweisen. Eine Kraftstoffleitung 18 führt vom Kraftstofftank 14 zur Gemischbildungsanlage 16. In der Kraftstoffleitung 18 ist eine Benzinpumpe 20 angeordnet, die im Bereich des Verbrennungsmotors 12 angebracht ist.

Außerdem ist der Kraftwagen 10 mit einem Beschleunigungssensor 22 und einem Steuergerät (Auslösegerät) 24 zur Erkennung eines Unfalls, insbesondere eines Frontaufpralls, ausgerüstet. Derartige Beschleunigungssensoren 22 und Steuergeräte 24 sind zum Auslösen von Airbags oder Gurtstraffern bekannt. Sie sind Mitbestandteil der nachfolgend zu beschreibenden erfindungsgemäßen Vorrichtung 26.

Die erfindungsgemäße Vorrichtung 26 weist ein erstes, in seiner Grundstellung offenes Absperrventil 28 auf, das am, im oder nahe beim Kraftstofftank 14 in der Kraftstoffleitung 18 angeordnet ist. Des weiteren weist die Vorrichtung 26 einen Kraftstoffbehälter 30 zusätzlich zum Kraftstofftank 14 auf, der motorseitig vom ersten Absperrventil 28 an die Kraftstoffleitung 18 angeschlossen ist. Der Kraftstoffbehälter 30 ist so bemessen, dass er Kraftstoff aus der Gemischbildungsanlage 16 der Kraftstoffleitung 18 und eventuellen weiteren, kraftstoffenthaltenden oder kraftstoffführenden Bauteilen wie beispielsweise der Benzinpumpe 20 aufnehmen kann. Der Kraftstoffbehälter 30 ist durch eine Unterdruckleitung 32 an ein Saugrohr 34 des Verbrennungsmotors 12 bzw. der Gemischbildungsanlage 16 angeschlossen. Mit anderen Worten ist der Kraftstoffbehälter 30 durch die Unterdruckleitung 32 an ein Bauteil oder eine Stelle des Verbrennungsmotors 12 oder der Gemischbildungsanlage 16 angeschlossen, das im Betrieb einen Unterdruck aufweist. Dadurch weist der Kraftstoffbehälter 30 bei laufendem Verbrennungsmotor 12 einen Unterdruck auf. In der Unterdruckleitung 32 ist ein in Richtung des Verbrennungsmotors 12 bzw. der Gemischbildungsanlage 16 durchströmbares Rückschlagventil 36 angeordnet. Das Rückschlagventil 36 verhindert, dass Luft oder ein sonstiges Medium durch die Unterdruckleitung 32 in den Kraftstoffbehälter 30 strömt. Ein zweites, in seiner Grundstellung geschlossenes Absperrventil 38 trennt den zusätzlichen Kraftstoffbehälter 30 von der Kraftstoffleitung 18.

An der Gemischbildungsanlage 16 ist ein drittes Absperrventil 40 angeordnet, das ebenfalls in seiner Grundstellung geschlossen ist. Durch das dritte Absperrventil 40 kann, wenn es geöffnet wird, Umgebungsluft in die Gemischbildungsanlage 16 einströmen. Das dritte Absperrventil 40 ist so angeordnet, dass eine möglichst vollständige Entleerung der Gemischbildungsanlage 16 durch die Kraftstoffleitung 18 möglich ist.

Des weiteren weist die erfindungsgemäße Vorrichtung 26 eine Bypassleitung 42 auf, die die Kraftstoffpumpe 20 umgeht und die vor und hinter der Kraftstoffpumpe 20 in die Kraftstoffleitung 18 mündet. In der Bypassleitung 42 ist ein in seiner Grundstellung geschlossenes Bypassventil 44 angeordnet. Als weiteres Bauteil weist die erfindungsgemäße Vorrichtung 26 einen Druckluftbehälter 46 auf, der über ein in seiner Grundstellung geschlossenes Absperrventil 48 mit der Gemischbildungsanlage 16 verbunden ist. Außerdem weist die erfindungsgemäße Vorrichtung 26 eine Einrichtung zum manuellen Auslösen auf. Dies ist im dargestellten und beschriebenen Ausführungsbeispiel ein Auslösetaster 50. Die Absperrventile 28, 38, 40, 44, 48 sind im dargestellten und beschriebenen Ausführungsbeispiel der Erfindung Magnetventile.

Die Funktion der erfindungsgemäßen Vorrichtung 26 ist folgende: Wird ein Unfall mit dem Beschleunigungssensor 22 erkannt, schließt das Steuergerät 24 das erste Absperrventil 28 und trennt dadurch den Kraftstofftank 14 von der Kraftstoffleitung 18. Gleichzeitig werden das zweite und das dritte Absperrventil 38, 40 und das Bypassventil 44 geöffnet, wodurch der mit Untedrruck beaufschlagte Kraftstoffbehälter 30 den in der Gemischbildungsanlage 16, der Kraftstoffleitung 18 und der Kraftstoffpumpe 20 enthaltenen Kraftstoff ansaugt und dadurch die genannten Bauteile von Kraftstoff leert. Durch das dritte Absperrventil 40 strömt Luft nach. Durch das Leeren der Kraftstoff enthaltenden oder führenden Bauteile 16, 18, 20 und das Trennen des Kraftstofftanks 14 von der Kraftstoffleitung 18 wird verhindert, dass Kraftstoff aus der Kraftstoffleitung 18 ausläuft, wenn diese durch den Unfall beschädigt und undicht oder abgerissen wird. Das Entleeren der Gemischbildungsanlage 16, der Kraftstoffleitung 18 und der Kraftstoffpumpe 20 erfolgt in beispielsweise etwa einigen 10 ms, also in ungefähr der Zeitspanne, die bis zum Straffen eines Sicherheitsgurts oder einem Füllen eines Airbags vergeht. Die Zeitspanne zum Entleeren ist so kurz, dass die Gemischbildungsanlage 16, die Kraftstoffleitung 18 und die Kraftstoffpumpe 20 entleert sind bevor die Kraftstoffleitung 18 durch den Unfall beschädigt werden kann. Nach dem Leeren der genannten Bauteile von Kraftstoff wird das zweite Absperrventil 38 vorzugsweise wieder geschlossen, so dass der mit dem aus den entleerten Bauteilen gefüllte Kraftstoffbehälter 30 von der Kraftstoffleitung 18 getrennt ist. Das Schließen des zweiten Abstellventils 38 ist entbehrlich wenn der Kraftstoffbehälter 30 so an die Kraftstoffleitung 18 angeschlossen ist, dass im Kraftstoffbehälter 30 enthaltener Kraftstoff nicht von selbst in die Kraftstoffleitung 18 fließt.

Des weiteren öffnet das Steuergerät 24 bei einem Unfall das Absperrventil 48 des Druckluftbehälters 46, was ebenfalls ein Entleeren der Gemischbildungsanlage 16, der Kraftstoffleitung 18 und der Kraftstoffpumpe 20 in den Kraftstoffbehälter 30 bewirkt. Der zusätzlich zum Kraftstofftank 14 vorgesehene und mit Unterdruck beaufschlagte Kraftstoffbehälter 30 bildet mit dem ihm zugeordneten zweiten Absperrventil 38 eine Einrichtung zum Entleeren der Gemischbildungsanlage 16, der Kraftstoffleitung 18 und der Kraftstoffpumpe 20 von Kraftstoff. Eine weitere solche Einrichtung bildet der Druckluftbehälter 46 mit seinem Absperrventil 48. Es reicht aus, eine der beiden Einrichtungen 30, 38; 46, 48 zum Entleeren der Gemischbildungsanlage 16, der Kraftstoffleitung 18 und der Kraftstoffpumpe 20 von Kraftstoff vorzusehen. Der mit Unterdruck beaufschlagte Kraftstoffbehälter 30 mit dem zweiten Absperrventil 38 ist entbehrlich, wenn die Gemischbildungsanlage 16, die Kraftstoffleitung 18 und die Kraftstoffpumpe 20 mit dem Druckluftbehälter 46 von Kraftstoff entleert werden. Die Entleerung des Kraftstoff erfolgt in diesem Fall in den Kraftstofftank 14 des Kraftwagens 10. Das erste Absperrventil 28 bleibt in diesem Fall nach einem Unfall geöffnet, bis die Gemischbildungsanlage 16, die Kraftstoffleitung 18 und die Kraftstoffpumpe 20 von Kraftstoff entleert sind. Für das Entleeren, d. h. bis zum Schließen des ersten oder zweiten Absperrventils 28, 38, kann eine festgesetzte Zeitspanne oder beispielsweise ein Druckanstieg im Kraftstoffbehälter 30 auf nahezu Umgebungsdruck abgewartet werden. In letzterem Fall ist ein in der Zeichnung nicht dargestellter Drucksensor an den Kraftstoffbehälter 30 anzuschließen.

Mit dem Auslösetaster 50 lässt sich die Vorrichtung 26 manuell auslösen wenn beispielsweise ein Motorbrand ausbricht.

## Patentansprüche

1. Vorrichtung zur Verhinderung eines Motorbrandes in einem Kraftfahrzeug bei einem Unfall, wobei das Kraftfahrzeug einen Kraftstofftank, einen Verbrennungsmotor, eine vom Kraftstofftank zum Verbrennungsmotor führende Kraftstoffleitung und einen Beschleunigungssensor aufweist, **dadurch gekennzeichnet, dass** die Vorrichtung (26) ein in der Kraftstoffleitung (18) angeordnetes Absperrventil (28) und eine Einrichtung (30, 38; 46, 48) zum Entleeren von Kraftstoff aus der Kraftstoffleitung (18) in den Kraftstofftank (14) aufweist.

2. Vorrichtung nach Anspruch 1, **dadurch gekennzeichnet, dass** die Vorrichtung (26) einen an die Kraftstoffleitung (18) angeschlossenen Kraftstoffbehälter (30) aufweist.

3. Vorrichtung nach Anspruch 2, **dadurch gekennzeichnet, dass** die Vorrichtung (26) ein zweites Absperrventil (38) aufweist, das den Kraftstoffbehälter (30) im gewöhnlichen Fahrbetrieb von der Kraftstoffleitung (18) trennt und dass der Kraftstoffbehälter (30) mit Unterdruck beaufschlagt ist.

4. Vorrichtung nach Anspruch 3, **dadurch gekennzeichnet, dass** die Vorrichtung (26) ein drittes Absperrventil (40) aufweist, das im Bereich einer Gemischbildungsanlage (16) des Verbrennungsmotors (12) angeordnet ist.

5. Vorrichtung nach Anspruch 1, **dadurch gekennzeichnet, dass** die Vorrichtung (26) einen Druckmittelbehälter (46) aufweist, der über ein Absperrventil (48) an eine Gemischbildungsanlage (16) des Verbrennungsmotors (12) angeschlossen ist.

6. Vorrichtung nach einem der vorhergehenden Ansprüche, **dadurch gekennzeichnet, dass** die Vorrichtung (26) eine Bypassleitung (42), die ein in der Kraftstoffleitung (18) angeordnetes Bauteil (20), das nicht in Richtung des Kraftstofftanks (14) durchströmbar ist, umgeht, sowie ein in der Bypassleitung (42) angeordnetes Bypassventil (44), aufweist.

7. Vorrichtung nach einem der vorhergehenden Ansprüche, **dadurch gekennzeichnet, dass** die Vorrichtung (26) eine Einrichtung (50) zum manuellen Auslösen aufweist.

8. Vorrichtung nach einem der vorhergehenden Ansprüche, **dadurch gekennzeichnet, dass** die Vorrichtung (26) eine Einrichtung zum Unterbrechen einer Zündung des Verbrennungsmotors und/oder eine Einrichtung zum Abschalten einer Fahrzeugelektrik aufweist.
